# EUROPEAN PATENT SPECIFICATION

(11) **EP 1 397 589 B1**
(45) Date of publication and mention of the grant of the patent: **16.03.2005**
(21) Application number: 02743618.7
(22) Date of filing: 31.05.2002
(51) Int. Cl.: F02M 31/125, F02M 27/04

(54) **A PROCESS FOR HEATING AND DOUBLE ELECTROMAGNETIC POLARIZATION OF LIQUID AND GASEOUS FUEL, AND THE RELATIVE DEVICE**
VERFAHREN ZUR ERHITZUNG UND DOPPELTEN ELEKTROMAGNETISCHEN POLARISATION VON FLÜSSIGEM UND GASFÖRMIGEM BRENNSTOFF UND DAZUGEHÖRIGE VORRICHTUNG
PROCEDE POUR LE CHAUFFAGE ET LA DOUBLE POLARISATION ELECTROMAGNETIQUE D'UN COMBUSTIBLE LIQUIDE ET GAZEUX, AINSI QUE DISPOSITIF ASSOCIE

(30) Priority: 08.06.2001 IT CR20010004
(43) Date of publication of application: 17.03.2004
(73) Proprietor: Crete Trading S.R.I., 53010 Arbia Scalo di Asciano (IT)
(72) Inventor: SCALI, Franco, I-53010 Arbia Scalo di Asciano (IT)
(74) Representative: Mascioli, Alessandro
(86) International application number: PCT/IT2002/000351
(87) International publication number: WO 2002/101224

(56) References cited:
- WO-A-98/42971
- GB-A- 806 230
- US-A- 4 005 683

## Description

The present invention concerns a process for heating and double electromagnetic polarization of liquid and gaseous fuel, and the relative device.

One of the main problems arising from the use of liquid and gaseous fuel for heating as well as for engines, consists of the incomplete combustion of the mixture formed by fuel and supporter of combustion. Such phenomenon lowers the combustion output, determining an increase in the consumption as well as the emission of highly polluting substances, dangerous for human health, like e.g. unburned hydrocarbons or other products deriving from an incomplete combustion of the fuel mixture.

The incomplete combustion occurs, in particular, when using strongly reduced loads, e.g. when vehicles are driving in urban areas, characterized in the engine working at minimum speed and for short time periods, and with repeated operations of starting and stopping the engine.

At present, a number of realization devices are used in vehicles using liquid or gaseous fuel, for increasing the combustion efficiency, for reducing the consumption and also the production of pollution substances. In particular, said processes and devices mainly consist in introducing into the burning chamber a burning mixture as homogeneous as possible so as to facilitate the spreading of the flame and thus obtaining a complete combustion, with no fuel particles unburned.

It is also known, in this regard, that polarization processes are used in which the fuel - by means of special devices - is subjected to a magnetic field of a determined intensity so as to suitably guide its molecules and thus facilitating the burning. In vehicles with internal combustion, e.g., devices are used mounted onto the fuel feeding pipe, in which the fuel is forced to pass through a magnetic field, usually produced by a winding crossed by electric current

Patent specification GB 806 230 discloses an apparatus for improving the combustion properties of gaseous or liquid fuels, basically comprising a coil connectable to a source of electric current and disposed around a tubular non-magnetic body or duct. As a result, the fuel flowing through the assembly is subjected to the action of an intermitted electromagnetic field created by electric current flowing through the coil windings.

The known fuel polarization processes and the devices therefore show however some inconveniences.

One of the disadvantages consists in that the efficiency of the polarization process feels the effects of the temperature, which the fuel reaches by means of said device. The devices actually in use reach their highest efficiency only after a determined initial heating period, thus showing a not optimal efficiency in intermittent use and with partial load. The polarization devices used on medium power vehicles, e.g., request a heating period of about 30 minutes, and are therefore inefficient when using the same vehicle only for short distances in an urban area.

Another disadvantage consists in that, due to the fact that the efficiency of the polarization process and devices feels the effects of the fuel's temperature, the same should be constant. On the contrary, the temperature is particularly low in the first minutes of cold use of the device or when the use is an intermittent one.

It is the aim of the present invention to eliminate or to reduce above mentioned inconveniences.

The main purpose of the process and device according to the present invention consists in the realization of a process for heating at a determined temperature comprised between 30°C and 65°C and double electromagnetic polarization for liquid and gaseous fuels, helping for a complete combustion, and that may assure a high and constant efficiency in all use conditions, thus solving the problem of the smoldness of the exhaust gas emissions and of the pollution.

A further aim consists in the realization of a device for applying the described process, of high efficiency, cheap and of easy realization and installation.

A further aim consists in the realization of a device for the application of the described process and that is particularly suitable for reducing the consumption and the polluting emissions of vehicle engines running with petrol, gas-oil or liquid propane, in particular during short runs in an urban area.

These and other aims are reached by means of the present invention, consisting of a process for heating and double electromagnetic polarization for liquid and gaseous fuels, characterized in that it comprises the following phases:
- a controlled heating of the fuel at a determined temperature, comprised between 30°C and 65°C;
- the passage of the fuel flow along the axis of an electromagnetic field;
- the return of the fuel through the same electromagnetic field according to an external, opposite and coaxial flow with respect to the preceding flow.

The device for the realization of said process is characterized in that it comprises:
- a hydraulic module supported by a collector and crossed by the fuel flow, comprising two coaxial pipes in which the innermost pipe is crossed by the inlet flow to the device and the external pipe - closed at the end at the way out of the first pipe - is crossed by the outlet flow;
- heating means for obtaining a thermic flow for heating the fuel flow;
- polarization means for generating an electromagnetic field with constant intensity, whereby the axis thereof is aligned with the axis of said coaxial pipes.

For increasing the efficiency of the device according to the present invention and making it more constant, said heating means comprise an electric resistance placed in correspondence of the inlet section of the fuel in the hydraulic module, and controlled by a thermostat; furthermore, they comprise a pre-heating chamber in which the fuel is heated before it flows inside said coaxial pipes.

Said polarization means comprise a coil having a suitable number or turns and being connected to a continuous current generator or, as an alternative, to a permanent magnet that generates a magnetic field equivalent to the one of said coil.

The advantages obtained by means of the present invention mainly consist in that, due to, the heating and to the polarization of the fuel, an atomising and homogenisation effect of the fuel is obtained and the fuel burns with a complete combustion of the mixture with a following reduction of the specific consumption and of the emission of polluting substances, in respect of ecology. In the application on internal combustion engines, the advantages consist in particular in the reduction of consumption, of the smoldness. of the exhaust gases, of an improvement of the performances, of a longer duration of the engine due to the reduced deposit of unburned slag on injectors, sparking plugs, piston and burning chamber. Furthermore, it facilitates the installation of the device onto any eight-cycle or diesel engine fed with petrol, gas-oil or liquid propane.

The heating phase allows the fuel to reach, in short time, the temperature that allows the maximum efficiency of the process according to the present invention, allowing to obtain a high efficiency in all use conditions, and in particular to realize efficient devices also on vehicles used for short runs also in urban areas.

Furthermore, said heating phase may be obtained by means of a heating device, like e.g. an electric resistance, controlled by a thermostat, keeping the temperature of the fuel constant to the advantage of the performance constancy.

By suitably varying the intensity of the magnetic field - which can be obtained varying the number of turns of the coil generating said field - it might be possible to optimise the efficiency of the process according to the kind of fuel, then realizing devices specially suitable for vehicle engines of low or high power, fed with petrol, gas-oil or liquid propane.

Further features and advantages of the process and device according to the present invention will be described more in detail herein below relating to the enclosed drawings in which:
figure 1 shows a scheme of the process for heating and electromagnetic polarization for liquid and gaseous fuel according to the present invention;
figure 2 shows a longitudinal section of a device for the realization of the process according to the present invention;
figure 3 shows a longitudinal section of a realization variant of the device according to figure 2;
figures 4 and 5 show a longitudinal section of an exemplifying variant of the devices shown in figures 2 and 3; and
figure 6 shows a longitudinal section of a further realization variant of the device shown in figure 2.

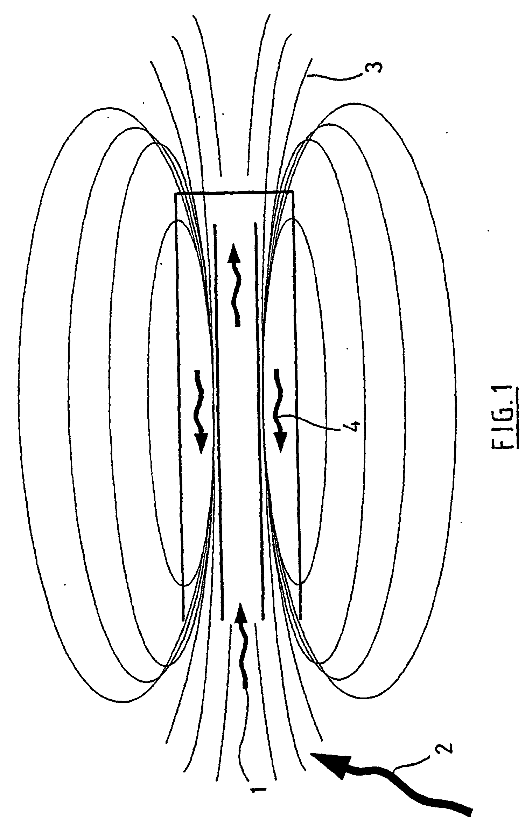

Relating to the details shown in figure 1, the process for double electromagnetic polarization of liquid and gaseous fuel comprises the following phases:
- the heating of fuel 1 due to a thermic flow 2, produced by a suitable heat source like, e.g., an electric resistance;
- the passing of the fuel flow 1 through a magnetic field 3, placed in an axis to said fuel flow, and generated by a permanent magnet or by a rectilinear solenoid, fed in continuous current;
- the return of the fuel through the same electromagnetic field 3 following a flow 4 being opposite and coaxial, external to the one of the preceding flow.

In a simplified but less efficient variant of the process described, the magnetic field 3 is generated by a rectilinear solenoid fed in continuous current and the thermic flow 2 is due only to the heating of said solenoid, due to the passing of electric current through the same.

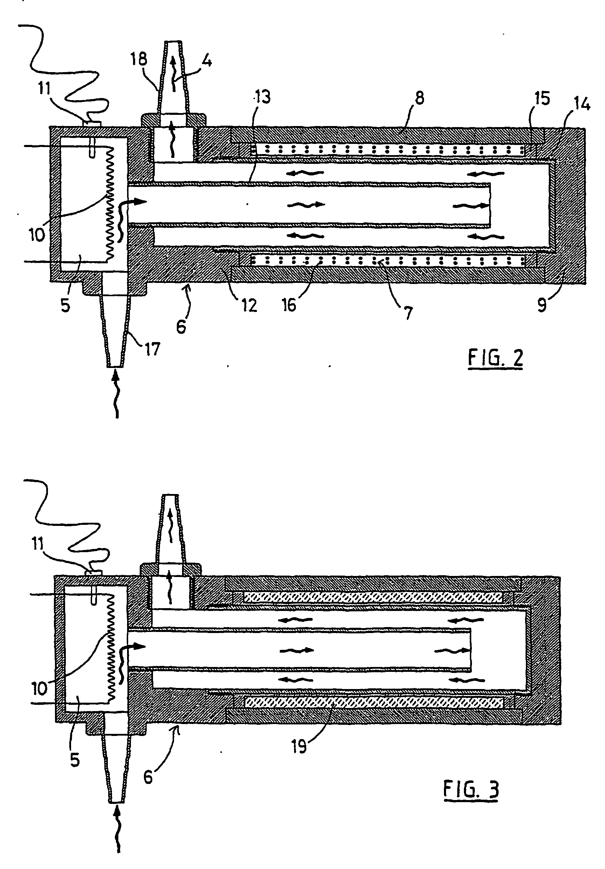

Figures 2 to 6 show, in a number of variants and for exemplifying and not limiting purposes only, a device for the realization of the heating and polarization of fuel according to the present invention. In a first variant, shown in figure 2, said device mainly comprises a pre-heating chamber 5 connected to a hydraulic module 6 and to a coil 7 for generating a magnetic field. Furthermore, the device according to the present invention comprises an outer sleeve 8 and a closing tap 9. The pre-heating chamber 5 has an electric resistance 10 controlled by a thermostat 11, that may be placed in said pre-heating chamber 5 or, in an alternative, in correspondence with the fuel outlet section of the device. Said electric resistance 10 is advantageously out of non ferromagnetic material so as not to be magnetized by said magnetic field 3 and thus generate a different magnetic field that might interfere with said field 3.

The hydraulic module 6 comprises a collector 12, a first 'go' pipe 13, connected to the pre-heating chamber 5, and a second 'return' pipe 14, coaxial and external to said first one. On the portion of said pipe 14 external to said collector 12, a spool 15 is inserted onto which the turns 16 of said coil 7 are turned. Said coil 7 is connected, by means of electric wires, to a suitable tension generator, like e.g. the battery of a vehicle.

The closing tap 9 is screwed at the closed end of said pipe 12 and keeps the outer sleeve 8 in position, and said sleeve 8 protects said coil 7.

The connection for the fuel's inlet consists of a rubber carrier 17 directly connected to said pre-heating chamber 5, while the fuel's outlet takes place through a rubber carrier 18 fixed to the hydraulic module 6, in correspondence with the outlet section of said pipe 14. The fuel's pipes, which are not shown, are blocked at their respective rubber carriers with tightening clips of the known kind.

The total length of aid tubing 13 - from the inlet section into said collector 12 up to the other end - is advantageously of about 75 mm, while the inner diameter is of about 6 mm. For devices to be installed onto high power diesel engines, the length and inner diameter of said pipe 13 are respectively of about 95 m and 8 mm.

The total length of said pipe 14 - from the closed end section up to the inlet section into said collector 12 - is advantageously of about 60 mm and its inner diameter is of about 10 mm. For devices to be installed onto high power diesel engines, the total length and the inner diameter of said pipe 14 are respectively of 85 mm and 12mm.

Said collector 12 is advantageously realized with a prismatic body with a hexagonal square section, with a limited circle diameter of about 32 mm and with a length nearly equal to said diameter.

The outer sleeve 8 is advantageously realized with a hollow cylinder, with an outer diameter of 32 mm and a length of about 60 mm. For devices to be installed onto high power diesel engines, la length of said outer sleeve is of about 85 mm.

The threaded tap 9 is advantageously realized with a prism with a section identical to the one of said collector 12 and a height of about 11 mm.

The spool 15 has an inner diameter of about 12 mm and a length of about 55 mm. For devices to be installed onto high power diesel engines, the diameter of said spool 15 is of about 14 mm and its length is of about 80 mm.

The turns 16 are advantageously realized with a copper wire of the diameter of 0,35 mm coated with a double insulating enamel.

The main advantage of this realization consists in that the fuel is quickly heated in the pre-heating chamber 5 up to a temperature optimal for the device according to the present invention. Furthermore, the temperature of the fuel may be kept constant and controlled due to said pre-heating chamber 5 and to the electric resistance 10 controlled by said thermostat 11.

In a realization variant of the device according to the present invention shown in figure 3, said coil 7 is replaced by a permanent magnet 19 wrapping the outer portion of said pipe 14, for generating a magnetic field equivalent to the one generated by said coil 7. Said permanent magnet 19 may be of hollow annular shape or, as an alternative, it may consist of a plurality of elements placed around the outer surface of said pipe 14.

The advantage of this realization variant consists in that the permanent magnet 19 does not produce heat and therefore it does not alter the fuel's temperature, which remains nearly constant inside the device. Thus an accurate control of the fuel's temperature is made possible through said electric resistance and said thermostat 11, to the advantage of the global performance of the device according to the present invention.

In a simplified version of the device according to the present invention, the pre-heating chamber 5 is not provided and the heating electric resistance 10, connected to said thermostat 11, is placed in correspondence with the inlet of the 'go' pipe 13. Said resistance 10 may also be drowned in said rubber carrier 17.

The number of the spools and the feeding tension for said coil 7 are advantageously chosen according to the feeding tension and of the kind of fuel used.

In devices to be installed onto petrol-fed engines, said coil7 is advantageously realized with 1020 spools and is fed with 12 V continuous current.

In devices to be installed on liquid propane-fed vehicles, said coil 7 is advantageously realized with 980 spools and is fed with 12 V continuous current.

In devices to be installed onto gas-oil-fed vehicles, said coil 7 is advantageously realized with 920 spools and is fed with 12 V continuous current.

The devices to be installed onto high power gas-oil-fed engines, like those used for operating machines, said coil 7 is advantageously realized with 2040 spools and is fed with 24 V continuous current.

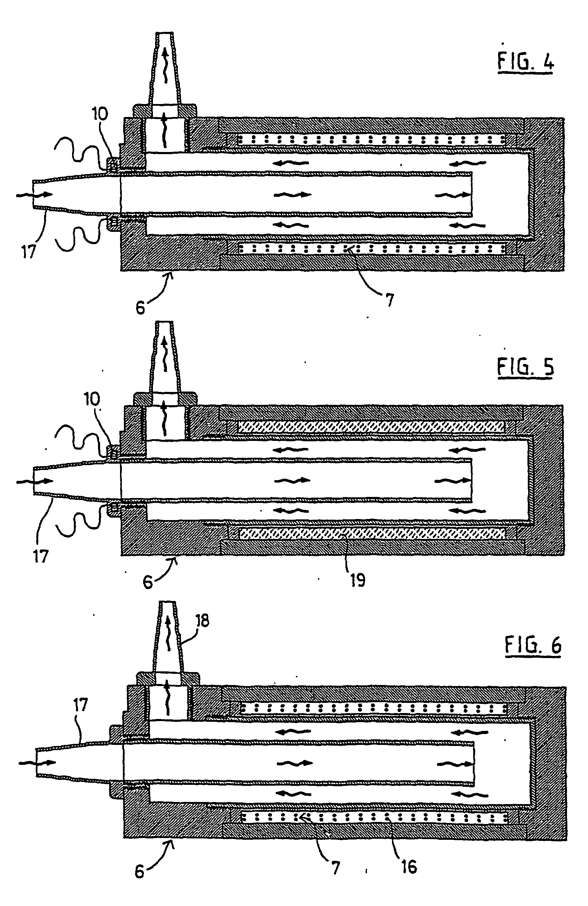

Such a number of spools allows a heating effect due to the electric current passing through said spools and that allows, in a realization simplification of the described device according to the present invention, to avoid the use of the electric heating resistance. In such realization simplification, shown in figure 6, the device according to the present invention does not comprise said pre-heating chamber 5 nor said electric heating resistance 10, and the heating of the fuel takes place due to the passage of electric current through said coil 7. Such variant is particularly simple and cheap, but it does not allow to control and maintain constant the fuel's temperature with absolute safeness.

In the process for heating and electromagnetic polarization according to the present invention, the flow of the liquid or gaseous fuel 1 is heated by a thermic flow 2 until it reaches a temperature between 35°C and 65°C, then it passes along the axis of said electromagnetic field 3 moving from one pole to the other and then returns, in the opposite direction, towards the inlet section, passing again and in opposite direction through said electromagnetic field 3, in a coaxial flow 4 with an annular section and external to the first one.

Thus, the fuel will be heated and polarized twice and the ions migrate and move according to the polarity of the electromagnetic field, thus making easy the atomisation and the combustion in the blast chamber.

Relating to the device for the realization of the process according to the present invention, it may be applied onto the pipe feeding the fuel to the carburettor or onto the injection pump. The feeding wires of the coil and of the resistance for heating the fuel must be connected with the board of the vehicle so that the device starts working when the starting board is on.

The liquid fuel flow 1 coming from the tank is introduced in the innermost pipe 13, passes through its whole length to the outlet and then returns through the space with an annular section formed between the external coaxial pipe 14 and said pipe 13, and finally leaves through said rubber carrier 18 placed onto said collector 12.

## Claims

1. A process for the heating and double electromagnetic polarization for liquid and gaseous fuel, ***characterized in that*** it comprises the following phases:
- a controlled heating of the fuel at a determined temperature, comprised between 30°C and 65°C;
- a passage of the fuel flow along the axis of an electromagnetic field (3);
- a return of the fuel through the same electromagnetic field (3) according to an external, opposite and coaxial flow (4) with respect to the preceding flow.

2. Process according to claim 1, ***characterized in that*** said controlled heating is preliminary to the following phases of passage of fuel flow along the axis of an electromagnetic field (3) and return.

3. Process according to claim 1, ***characterized in that*** the heating of the fuel flow takes place contemporarily to the crossing of said electromagnetic field (3) due to the effect of the heat produced by electric current passing through a rectilinear solenoid generating said electromagnetic. field.

4. A device for heating and polarizing liquid fuel according to the process of claim 1, ***characterized in that*** it comprises:
- a hydraulic module (6) supported by a collector (12) and crossed by the fuel flow, comprising two coaxial pipes (13 and 14) in which the inner pipe (13) is crossed by the inlet flow to the device and the external pipe (14) - closed at the end placed at the way out of the first pipe (13) - is crossed by the outlet flow;
- heating means (10) for heating the fuel flow at a determined temperature comprised between 30 °C and 65 °C,
- polarization means (7, 19) for generating an electromagnetic field (3) with constant intensity, whereby the axis thereof is aligned with the axis of said coaxial pipes (13, 14).

5. Device according to claim 4, ***characterized in that*** said heating means comprise an electric resistance (10) realized out of a non ferromagnetic material and placed in correspondence with the initial section of the pipe (13) and connected to a device (11) for the thermostatic regulation of the fuel's temperature.

6. Device according to claim 4 or 5, ***characterized in that*** said heating means comprise a pre-heating chamber (5) connected to the inner pipe (13).

7. Device according to claim 4, ***characterized in that*** said polarization means comprise a permanent magnet (19) wrapped up around the outer surface of the pipe (14).

8. Device according to claim 4, ***characterized in that*** said polarization means comprise a coil (7) fed with continuous current.

9. Device according to claim 8 that may be installed onto the feeding pipe of engines for vehicles, ***characterized in that***:
- the coil (7) is realized with 1020 spools and is fed with 12 V continuous current for petrol or gas engines;
- for liquid propane engines, said coil (7) is realized with 980 spools and is fed with 12 V continuous current;
- for gas-oil engines, said coil (7) is realized with 920 spools and is fed with 12 V continuous current; and
- for diesel engines, said coil (7) is realized with 2040 spools and is fed with 24 V continuous current.

10. A motor vehicle ***characterized in that*** it comprises a device according to one or more of the claims 4 to 9.

## Patentansprüche

1. Heizverfahren und Verfahren der doppelten elektromagnetischen Polarisierung für flüssige und gasförmige Brennstoffe, das sich **dadurch** auszeichnet, dass es die folgenden Phasen umfasst:
- Kontrollierte Erwärmung des Brennstoffs auf eine bestimmte Temperatur, die zwischen 30 °C und 65 °C liegt;
- Durchfluss des Brennstoffflusses entlang der Achse eines elektromagnetischen Felds (3);
- Rückkehr des Brennstoffs über dasselbe elektromagnetische Feld (3), gemäß einem koaxialen, externen Fluss (4), der dem vorausgehenden Fluss entgegengesetzt ist.

2. Verfahren gemäß dem Anspruch 1, das sich **dadurch** auszeichnet, dass die genannte kontrollierte Erwärmung vor den darauffolgenden Phasen des Durchflusses des Brennstoffflusses entlang der Achse eines elektromagnetischen Felds (3) und zurück stattfindet.

3. Verfahren gemäß dem Anspruch 1, das sich **dadurch** auszeichnet, dass die Erwärmung des Brennstoffflusses gleichzeitig mit dem Queren des genannten elektromagnetischen Felds (3) durch Wirkung der vom Durchfluss elektrischen Stroms in einem geraden Solenoid, das das elektromagnetische Feld (3) erzeugt, produzierten Wärme erfolgt.

4. Vorrichtung zum Erwärmen und Polarisieren flüssiger Brennstoffe gemäß dem Verfahren des Anspruchs 1, die sich **dadurch** auszeichnet, dass sie Folgendes umfasst:
- Ein durch einen Sammler (12) gestütztes hydraulisches Modul (6), durch das der Brennstofffluss fließt, das zwei koaxiale Rohrleitungen (13, 14) umfasst, wobei die Rohrleitung weiter innen (13) vom Eingangsfluss in die Vorrichtung durchflossen wird und die Rohrleitung weiter außen (14) am an der Mündung der ersten Rohrleitung (13) gelegenen Ende geschlossen ist und vom Ausgangsfluss durchflossen wird;
- Heizgeräte (10) zum Erwärmen des Brennstoffflusses auf eine bestimmte Temperatur, die zwischen 30 °C und 65 °C liegt;
- Polarisierungsgeräte (7, 19) zur Erzeugung eines elektromagnetischen Felds (3) von konstanter Stärke, wo die Achse des genannten elektromagnetischen Felds (3) mit der Achse der genannten koaxialen Rohrleitungen (13, 14) ausgerichtet ist.

5. Vorrichtung gemäß dem Anspruch 4, die sich **dadurch** auszeichnet, dass die genannten Heizgeräte einen elektrischen Widerstand (10) aus nicht ferromagnetischem Material aufweisen, der in Übereinstimmung mit dem Anfangsschnitt der genannten Rohrleitung (13) positioniert und mit einer Vorrichtung (11) zur Thermostateinstellung der Brennstofftemperatur verbunden ist.

6. Vorrichtung gemäß dem Anspruch 4 oder 5, die sich **dadurch** auszeichnet, dass die genannten Heizgeräte eine Vorwärmkammer (5) umfassen, die mit der genannten inneren Rohrleitung (13) verbunden ist.

7. Vorrichtung gemäß dem Anspruch 4, die sich **dadurch** auszeichnet, dass die genannten Polarisierungsgeräte über einen Dauermagneten (19) verfügen, der die äußere Oberfläche der genannten Rohrleitung (14) umhüllt.

8. Vorrichtung gemäß dem Anspruch 4, die sich **dadurch** auszeichnet, dass die genannten Polarisierungsgeräte über eine Spule (7) verfügen, die mit Gleichstrom gespeist wird.

9. Vorrichtung gemäß dem Anspruch 8, die zur Anwendung an der Versorgungsleitung von Kraftfahrzeugmotoren dient und sich **dadurch** auszeichnet, dass :
- diese Spule (7) für mit Benzin oder Gas gespeiste Kraftfahrzeuge mit 1020 Windungen erstellt wird und mit 12 V-Gleichstrom gespeist wird;
- diese Spule (7) für mit GPL gespeiste Kraftfahrzeuge mit 980 Windungen erstellt wird und mit 12 V-Gleichstrom gespeist wird;
- diese Spule (7) für mit Diesel gespeiste Kraftfahrzeuge mit 920 Windungen erstellt wird und mit 12 V-Gleichstrom gespeist wird;
- diese Spule (7) für Dieselmotoren mit hoher Leistung mit 2040 Windungen erstellt wird und mit 12 V-Gleichstrom gespeist wird.

10. Motorfahrzeug, das sich **dadurch** auszeichnet, dass es über eine Vorrichtung gemäß einer oder mehrerer der Ansprüche von 4 bis 9 verfügt.

## Revendications

1. Procédé de réchauffement et double polarisation électromagnétique pour combustibles liquides et gazeux, **caractérisé par le fait qu'**il comprend les phases suivantes:
- réchauffement contrôlé du combustible à une température déterminée, comprise entre 30 °C et 65 °C;
- passage du flux de combustible le long de l'axe d'un champ électromagnétique (3);
- retour du combustible à travers le même champ électromagnétique (3), selon un flux (4) coaxial, externe et opposé par rapport au flux précédent.

2. Procédé selon la revendication 1, **caractérisé par le fait que** ledit réchauffement contrôlé est préliminaire aux phases successives de passage du flux de combustible le long de l'axe d'un champ électromagnétique (3) et retour.

3. Procédé selon la revendication 1, **caractérisé par le fait que** ledit réchauffement du flux de combustible se produit simultanément au passage à travers ce champ électromagnétique (3) par effet de la chaleur produite par le passage de courant électrique dans un solénoïde rectiligne qui engendre le champ électromagnétique (3) lui-même.

4. Dispositif apte à réchauffer et polariser des combustibles liquides selon le procédé de la revendication 1, **caractérisé par le fait qu'**il comprend:
- un module hydraulique (6) supporté par un collecteur (12), parcouru par le flux de combustible, comprenant deux tuyauteries coaxiales (13, 14), où la tuyauterie plus interne (13) est parcourue par le flux en entrée au dispositif et la tuyauterie plus externe (14) est fermée à l'extrémité située à la sortie de la première tuyauterie (13), et est parcourue par le flux en sortie;
- moyens de réchauffement (10) pour réchauffer le flux de combustible à une certaine température comprise entre 30 °C et 65 °C ;
- moyens de polarisation (7, 19) pour engendrer un champ électromagnétique (3) d'intensité constante, où l'axe de ce champ électromagnétique (3) est aligné avec l'axe desdites tuyauteries coaxiales (13, 14).

5. Dispositif selon la revendication 4, **caractérisé par le fait que** lesdits moyens de réchauffement comprennent une résistance électrique (10) réalisée en matière non ferromagnétique, positionnée en correspondance de la section initiale de ladite tuyauterie (13) et reliée à un dispositif (11) de réglage thermostatique de la température du combustible.

6. Dispositif selon la revendication 4 ou 5, **caractérisé par le fait que** lesdits moyens de réchauffement comprennent une chambre de pré-réchauffement (5) reliée à ladite tuyauterie interne (13).

7. Dispositif selon la revendication 4, **caractérisé par le fait que** lesdits moyens de polarisation comprennent un aimant permanent (19) qui enroule la surface externe de ladite tuyauterie (14).

8. Dispositif selon la revendication 4, **caractérisé par le fait que** lesdits moyens de polarisation comprennent une bobine (7) alimentée en courant continu.

9. Dispositif selon la revendication 8, apte à être appliqué sur la conduite d'alimentation de moteurs de véhicules automobiles, **caractérisé par le fait que**:
- pour véhicules automobiles alimentés à l'essence ou au gaz, ladite bobine (7) est réalisée avec 1020 spires et est alimentée en courant continu à 12 V;
- pour véhicules automobiles alimentés à GPL, ladite bobine (7) est réalisée avec 980 spires et est alimentée en courant continu à 12 V;
- pour véhicules automobiles alimentés au gasoil, ladite bobine (7) est réalisée avec 920 spires et est alimentée en courant continu à 12 V;
- pour moteurs à cycle Diesel de puissance élevée, ladite bobine (7) est réalisée avec 2040 spires et est alimentée en courant continu à 24 V.

10. Véhicule à moteur, **caractérisé par le fait qu'**il comprend un dispositif selon une ou plusieurs des revendications de 4 à 9.
